Europäisches Patentamt

(19) European Patent Office

Office européen des brevets

(11) Publication number: **0 008 689**
**B1**

(12) # EUROPEAN PATENT SPECIFICATION

(45) Date of publication of patent specification: **30.03.83**

(51) Int. Cl.³: **B 29 D 23/04, B 29 D 27/00**

(21) Application number: **79102841.8**

(22) Date of filing: **07.08.79**

(54) **A method and an arrangement for the manufacture of a material web of foamed thermoplastics.**

(30) Priority: **22.08.78 SE 7808847**

(43) Date of publication of application:
**19.03.80 Bulletin 80/6**

(45) Publication of the grant of the patent:
**30.03.83 Bulletin 83/13**

(84) Designated Contracting States:
**BE CH DE FR GB IT NL**

(56) References cited:
**CH - A - 371 588**
**CH - A - 523 764**
**DD - A - 105 759**
**DE - A - 1 803 223**
**DE - A - 2 462 586**
**DE - A - 2 602 024**
**FR - A - 1 444 624**

(73) Proprietor: **TETRA PAK INTERNATIONAL AB**
**Fack 1701**
**S-221 01 Lund 1 (SE)**

(72) Inventor: **Nilsson, Lennart**
**Nordmannavägen 20**
**Lund (SE)**
Inventor: **Ljungberg, Per-Allan**
**Cederborghs väg 4**
**Lund (SE)**
Inventor: **Andrén, Sven-Olof**
**Vinkelvägen 10**
**Staffanstorp (SE)**

(74) Representative: **Müller, Hans-Jürgen, Dipl.-Ing.**
**et al,**
**Müller, Schupfner & Gauger Lucile-Grahn-Strasse**
**38 Postfach 80 13 69**
**D-8000 München 80 (DE)**

Courier Press, Leamington Spa, England

# A method and an apparatus for producing a web of foamed thermoplastics

This invention relates to a method for producing a web of foamed thermoplastics which comprises extruding the thermoplastic material in tubular form from a die, expanding this tube via a transition portion forming a tube bubble by means of a pressure medium issuing from an orifice provided on a mandrel which is arranged inside of the tube in axial alignment with the die, calibrating and cooling the expanded tube inside of a calibrating element whereby the pressure medium is made to flow along the inner surface of the tube to keep its outer surface in contact with the calibrating element, axially cutting up the tube when it is cooled to a temperature below the softening temperature of the material and converting the cut tube into a web-form. The invention also relates to an apparatus for producing a web in accordance with such a method.

In producing a web of foamed thermoplastics in accordance with a method of the kind as referred above it is most essential that the cooling of the material takes place as rapidly and as uniformly as possible in order to obtain a desired homogeneous foam structure. If this cooling should be too slow or not uniform enough, then the expansion of the material will partly continue in a respectively uncontrolled state so that some portions of the material will be expanded more than others and will accordingly obtain a lower density so that the material as a whole will inevitably be provided with a more or less uneven surface presenting a great number of craters and blisters. The thinner the material is due to a respectively stronger expansion, the more difficult it will be to obtain such a homogeneous structure whereby a most critical point is also the pressure regulation of the pressure medium issuing from the mandrel and made to flow along the inner surface of the tube to keep its outer surface in contact with the calibrating element.

In a known method and apparatus for producing a web of foamed thermoplastics of the kind referred to above, see (DD—A— 105 759), the pressure medium is made to issue from a plurality of circumferentially spaced holes of the mandrel in such a manner that the pressure medium is directed upstream towards the die. The pressure medium will therefore inevitably impinge against the tube in that transition portion forming a tube bubble. Since in this transition portion the thermoplastic material is still very brittle the pressure medium must be regulated very carefully to avoid any rupture of the tube bubble. The tube bubble being still very brittle, this direct contact of its inner wall with the pressure medium further causes irregularities in the micro structure of the tube material that it receives by the extrusion process and such a disturbed micro structure will then be frozen in when the tube is calibrated and cooled.

In accordance with a further known method and apparatus for producing a web of foamed thermoplastics (FR—A—1 444 624) provision is made for obtaining a preliminary solidification of the extruded tube slightly downstream of the die, where the expansion starting, by means of an external cooling ring and whereby the pressure medium is made to issue from an axial duct in the die so as to not materially contact the inner wall of the tube while it is expanded without the assistance of a separate mandrel. In this case there is further used a calibrating element comprising helically wound cooling tubes being provided with spacings between the individual windings and forming a profiled contact or working area with the outer surface of the extruded tube so as to achieve a smooth outer surface of the same by an evenning of all inherent blisters and craters that are created during the expansion of the tube. In this case the preliminary solidification of the tube by means of the external cooling ring restricts the primary expansion of the tube besides leading necessarily to a rather nonhomogeneous micro structure since right after its extrusion the thermoplastic material is still very brittle at this particular portion. Unless this preliminary solidification is not well conditioned the expanded tube when being relatively thin will also tend to ruptures through its material contact with the individual windings of the cooling coil. This tendency is somewhat less predominant in a similar known apparatus (CH—A—523 764) where instead of such an external cooling coil a cooling element with a smooth surface is provided and having means for creating a vacuum effect on the tube so as to prevent the inner wall of the same from being in contact with an internal mandrel fixed on the die by means of a hollow stem through which a pressure medium is made to flow and to issue from openings that are provided on this stem substantially at the transition portion of the tube forming a tube bubble which is preliminary solidified in this case as well by means of an external cooling ring surrounding the die immediately downstream of its orifice and directing cooling air towards the external wall of the tube.

It is accordingly an object of the present invention to provide a method for producing a web of foamed thermoplastics allowing the achieving of a more homogeneous foam structure during the tube forming step especially in that case where the wall of the tube is desired to be relatively thin and having a smooth outer surface.

In accordance with the present invention this object is achieved in that the pressure medium is made to issue from the orifice of the mandrel arranged at the upstream end of the calibrating element where the expansion of the tube is finished, the orifice providing an annular outflow opening around the axis of the mandrel in the moving direction of the tube in such a manner that the orifice does not direct the pressure medium into the tube bubble.

In accordance with the present invention provision is therefore being made to build up a static pressure within the tube bubble as soon as the tube-forming process has been initiated to work in a continuous manner to ensure that the pressure medium is no longer directed towards the inner wall of the tube bubble. The tube bubble will accordingly be provided during the entire tube-forming process with a certain constant overall pressure so that along this particular portion no effective chilling of the thermoplastic material takes place and the free expansion of the tube is therefore guaranteed to take place at an optimum without the risk for any rupture or for any disturbances of the micro structure of the material. When the expansion of the tube is finished and the tube then passes the orifice of the mandrel the chilling effect of the pressure medium will start immediately and practically at the same time when the tube is pressed against the surrounding wall of the calibrating element which means that this inner chilling effect then takes place at least substantially at the same time with the outer cooling so that the tube will receive its solidification more or less fully uniformly from both sides resulting in a much more homogeneous structure without any risk for a rupture.

In accordance with a preferred embodiment of the invention the rate of flow of the pressure medium should be made to exceed the moving speed of the tube. The pressure medium should be further directed towards the outer surface of the tube during its path through the calibrating element. With these features provision is made for obtaining a final product with optimum qualities.

An apparatus suitable for producing such a web of foamed thermoplastics and comprising an extruder having an extrusion die for extruding thermoplastic material in tubular form, a mandrel sited to extend into the extruded thermoplastic tube, the mandrel having an orifice for introducing a pressure medium into the thermoplastic tube, a calibrating element for surrounding the extruded thermoplastic tube, the calibrating element being provided with cooling means, a cutting means for cutting the thermoplastic tube axially and take-up means for the cut tube is characterized in accordance with the present invention by the features that the orifice of the mandrel is provided with an annular outflow opening around the axis of the mandrel in the moving direction of the tube and further with a streamlined cap being so arranged that the pressure medium is not directed into the tube bubble, the mandrel and the calibrating element being arranged relatively movable with respect to each other and with respect to the die.

In accordance with a preferred embodiment of such an apparatus the calibrating element may comprise a cooling coil of which the spacings between its individual windings forming the contact area with the outer surface of the tube are in communication with a source for a pressure medium directed towards the outer surface of the tube and from there to the atmosphere.

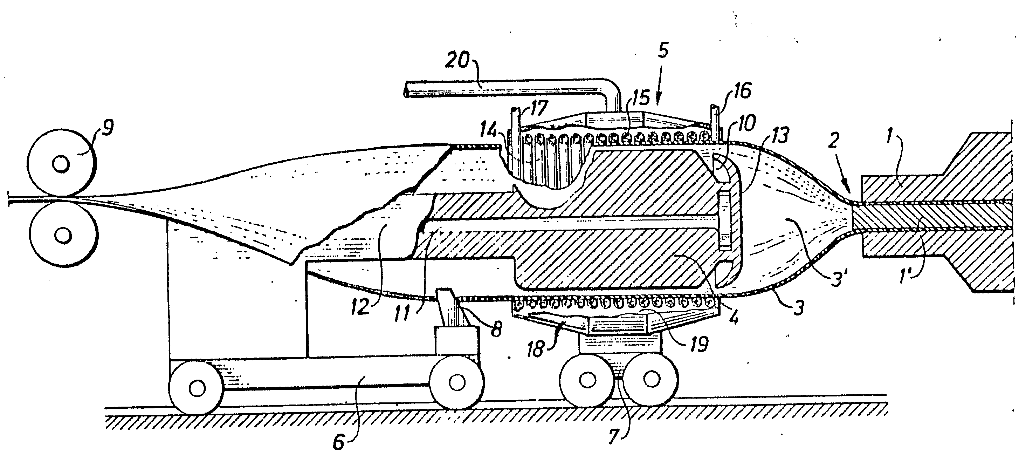

The invention will now be described in more detail by reference to the drawing showing schematically the preferred embodiment of the apparatus for producing a web of foamed thermoplastics in accordance with the invention.

The apparatus shown comprises a conventional high-pressure extruder (not shown) with a die 1 which has an annular outlet opening 2 for the extrusion of a foamed thermoplastic material in the form of a tube 3. The central portion of the outlet opening 2 is occupied by a core 1' by means of which the width of the gap of the outlet can be varied. Directly in front of the outlet opening 2 the extruded tube is expanded via a transition portion forming a tube bubble 3' which after having obtained its fully expanded state is then calibrated and cooled inside of a calibrating element 5 and in co-operation with an internal mandrel 4 which are both carried by carriages 6 and 7 being movable in the direction towards and away from the die 1. The carriage 6 carrying the mandrel 4 is provided at its front end facing in the direction towards the extruder with a cutting device 8 for the axial cutting up of the tube 3 which after this cutting up is laid flat by means of a pair of rollers 9.

The mandrel 4 is axially aligned with the die 1 and has a diameter which is several times greater than the diameter of the outlet opening 2. At its end facing towards the die 1 the peripheral surface of the mandrel 4 is provided with an orifice 10 arranged at the upstream end of the calibrating element where the expansion of the tube 3 is finished, the orifice 10 providing an annular outflow opening around the axis of the mandrel in the moving direction of the tube 3 in such a manner that the orifice does not direct a pressure medium which is supplied through a duct 11 extending centrally inside the mandrel 4 into the tube bubble 3'. The duct 11 is connected to an external pump or storage unit (not shown) for the pressure medium. The orifice 10 is provided with a streamlined cap 13 having substantially the same diameter as the cylindrical main portion of the mandrel 4.

The calibrating element 5 is also axially aligned with the die 1 and is movable relative to the die by the carriage 7 which as the carriage 6 rolls on rails arranged in parallel with the center axis of the die. The inner diameter of the calibrating element 5 exceeds the outer diameter of the mandrel 4 thusly allowing to be moved freely over the mandrel 4 and also over the front end of the die 1. When the calibrating element 5 and the mandrel 4 are in the position shown, an annular gap is formed between the outer cylindrical surface of the mandrel 4 and the inner working surface of the calibrating element 5. The width of this gap normally amounts to three times the material thickness. The tube 3 during manufacture is in contact with the inner working surface 14 of the calibrating element 5 which is profiled and preferably consists of a helically wound cooling tube 15 of copper or some other material of a good thermal conductivity the two ends of which project from the calibrating element 5 and form the inlet and the outlet 16, 17 respectively for a cooling fluid. The cooling coil 15 is supported by a surrounding shell 18 which is firmly attached to the carriage 7. In the embodiment of the calibrating element 5 shown the cooling coil 15 is wound so openly that a space of a few millimetres width exists between each turn of the winding, which allows the application of a pressure medium between the cooling coil 15 against the outside of the tube 3. The shell 18 is designed in such a manner than an annular duct 19 is formed around the outside of the cooling coil, which duct 19 may receive a pressure medium via a supply line 20.

In producing a web of foamed thermoplastics in accordance with the method according to the invention, the desired thermoplastics is supplied to the extruder in granular form. After heating of the granulate to melting temperature the thermoplastics is mixed with freon gas to form a homogeneous mixture which is pressed out via the die of the extruder through the outlet opening 2 in the form of a tube. At the start of the production the calibrating element 5 is displaced towards the right in the drawing to a position in which it surrounds the die 1, at the same time as the mandrel 4 has been displaced towards the left in the drawing, so that it is at a greater distance from the outlet opening 2 of the die 1. When the continuous extrusion of the tube through the outlet opening 2 has progressed for so long that the tube substantially reaches up to the cap 13 of the mandrel 4, the tube is expanded manually and slipped over the cap 13 as well as over the mandrel 4. Subsequently the mandrel 4 is moved successively in the direction towards the die 1 up to its position shown in the drawing, whilst at the same time the calibrating element 5 is moved towards the left in the drawing to its working position at the same level as the mandrel 4. With the help of a pressure medium, preferably compressed air supplied via the duct 11, it is ensured on the one hand that the tube 3 issuing from the outflow opening 2 expands and forms a so-called tube bubble 3', on the other hand that the tube 3 lies against the working surface in the calibrating element 5 formed by the helically wound cooling coil 15. More particularly, compressed air is supplied continuously to the orifice 10 situated at the front end of the mandrel 4, which compressed air builds up an inner pressure in the tube bubble 3', so as to ensure an even and uniform expansion of the tube. The pressure in the tube bubble 3' is maintained substantially constant during the whole extrusion process. The bulk of the compressed air supplied via the orifice 10 flows, as soon as the pressure in the tube bubble 3' has built up properly, through the annular gap between the cylindrical working surface of the mandrel 4 and the inner surface of the tube 3, whereby the still soft tube is pressed with simultaneous cooling against the profiled working surface 14 of the calibrating element 5, which processes the passing material so that any blisters and craters in the material surface are evened out and the material obtains a smoother surface. By regulating the supply of the pressure medium, the contact pressure against the working surface can be controlled. At the same time a continuous cooling of the tube 3 from the inside takes place with the help of the compressed air flowing along the inside of the tube and from the outside with the help of the cooling medium flowing through the cooling coil 15, which may consist of water which is passed into the cooling coil 15 via the inlet 16 and is conducted away via the outlet 17 at the opposite end of the shell 18.

In an embodiment of the invention it is possible, as mentioned earlier, to conduct a compressed fluid via the calibrating element 5 towards the outside of the tube 3. This is done with the help of the inlet pipe 20 through which the compressed fluid (preferably compressed air) is conducted to the annular duct 19 which distributes the compressed fluid around the whole circumference of the shell 18. The compressed fluid can flow therefore via the space between the winding turns of the cooling coil 15 against the outside of the tube 3 and then out into the atmosphere. By means of this supply of compressed air on the one hand a further facility for the accurate controlling of the contact pressure of the tube 3 against the working surface of the calibrating element 5 is obtained (as a result of which the cooling effect too can be controlled), on the other hand a facility for the blowing clean of the working surface 14 of the powdery plastic scrapings which in continuous operation are formed owing to the tube 3 lying against the cooling coil 15.

In continuous operation the tube 3 issuing from the outlet opening 2 of the extruder, whilst continuing to be at a temperature which exceeds the softening temperature of the material, will thus be expanded by means of the pressure in the tube bubble 3', whereupon the expanded tube, continuing its progress, will be pressed against the inside of the calibrating element 5 by means of the compressed air so as to be calibrated to the desired diameter and material thickness on the one hand, and receive a surface treatment on its outside on the other hand, so that the blisters and craters formed during extrusion and expansion of the tube will be evened out. When the tube 3 has passed the two calibrating elements, that is to say the mandrel 4 and the calibrating element 5, its diameter has been accurately defined at the same time as the material has been cooled uniformly from the outside and from the inside so that it is in a stable state. The tube 3 is then allowed to pass a cutting device 8, which is fixed appropriately on the carriage 6 supporting the mandrel 4. The cutting device 8 consists of an upright knife which, when the tube 3 passes, divides it by a longitudinal cut. The divided tube is then laid flat successively (possibly by means of guiding surfaces not shown), whereupon it is permitted to pass the pair of rollers 9, which on the one hand ensure the final flattening and on the other hand contribute to the propulsion of the material web. The material web is then made to pass an extruder (not shown) for the extrusion of the homogeneous, sealing layer onto the side of the material web, which by means of the method in accordance with the invention has been made smooth.

The calibrating element 5 is, as earlier discussed, preferably made up from one or more helically wound cooling tubes 15 which together form its working surface. Of course it is also possible to construct the working surface from some other unflexible material, e.g. a cylinder of steel which is provided with cooling means. In this connection it is of great importance that the working surface is profiled, e.g. by means of corrugating, as otherwise the slip resistance for the passing tube becomes too great. This depends on that the blisters and craters forming the surface of the tube give rise to a kind of "suction cup effect" that tends to lock the material against the working surface of the sleeve. This is efficiently avoided if the working surface is profiled, and furthermore the profiling promotes the mechanical working and smoothing of the surface of the tube.

Thanks to the method and arrangement in accordance with the invention a rational manufacture of thin foamed material of the type which is suitable for lamination with a homogeneous thermoplastic layer, which is impermeable to liquids, is made possible. The expanded layer will be homogeneous and obtain, beside a smooth and fairly crater-free surface, a very good internal quality with uniform pore size, since the cooling of the tube from the outside as well as from the inside can be controlled, so that an optimum cooling is obtained which preferably should be of equal intensity from both directions, so that hardening of the material takes place substantially simultaneously through the whole thickness of the material. The method and apparatus according to the invention also make possible a well-balanced adaptation of the contact pressure between the material and the calibrating element, which previously had not been possible. By the formation of an annular space of only a few millimetres width between the cylindrical working surface of the mandrel 4 and the inside of the tube 3, the preconditions for a uniform and trouble-free pressing of the outside of the tube against the working surface of the calibrating element by means of the compressed air flowing through the space are created. Owing to the relatively high rate of flow produced thereby, the cooling effect on the inner surface of the tube is also increased.

**Claims**

1. A method for producing a web of foamed thermoplastics which comprises extruding the thermoplastic material in tubular form from a die (1), expanding this tube (3) via a transition portion forming a tube bubble (3') by means of a pressure medium issuing from an orifice (10) provided on a mandrel (4) which is arranged inside of the tube in axial alignment with the die, calibrating and cooling the expanded tube (3) inside of a calibrating element (5) whereby the pressure medium is made to flow along the inner surface of the tube to keep its outer surface in contact with the calibrating element, axially cutting up the tube when it is cooled to a temperature below the softening temperature of the material and converting the cut tube into a web-form, characterized in that the pressure medium is made to issue from the orifice (10) of the mandrel (4) arranged at the upstream end of the calibrating element (5) where the expansion of the tube (3) is finished, the orifice (10) providing an annular outflow opening around the axis of the mandrel (4) in the moving direction of the tube (3) in such a manner that the orifice (10) does not direct the pressure medium into the tube bubble (3').

2. A method as claimed in claim 1, wherein the rate of flow of the pressure medium is made to exceed the moving speed of the tube (3).

3. A method as claimed in claim 1 or claim 2, wherein a pressure medium is directed towards the outer surface of the tube (3) during its path through the calibrating element (5).

4. An apparatus for producing a web in accordance with the method as claimed in claim 1, comprising an extruder having an extrusion die (1) for extruding thermoplastic material in tubular form, a mandrel (4) sited to extend into the extruded thermoplastic tube, the mandrel having an orifice (10) for introducing a pressure medium into the thermoplastic tube, a calibrating element (5) for surrounding the extruded thermoplastic tube, the calibrating element being provided with cooling means (14), a cutting means (8) for cutting the thermoplastic tube axially, and take-up means (9) for the cut tube, characterized in that the orifice (10) of the mandrel (4) is provided with an annular outflow opening around the axis of the mandrel in the moving direction of the tube (3) and further with a streamlined cap (13) being so arranged that the pressure medium is not directed into the tube bubble (3'), the mandrel (4) and the calibrating element (5) being arranged relatively movable with respect to each other and with respect to the die (1).

5. An apparatus as claimed in claim 4, wherein the calibrating element (5) comprises a cooling coil (15) of which the spacings between its individual windings forming the contact area with the outer surface of the tube (3) are in communication with a source for a pressure medium directed towards the outer surface of the tube and from there to the atmosphere.

## Revendications

1. Procédé pour fabriquer des feuilles en mousse thermoplastique qui comprend l'extrusion de la matière thermoplastique sous forme de tube à partir d'une filière (1), le gonflement de ce tube (3) sur une partie de transition formant un renflement de tube (3') au moyen d'un fluide sous pression s'échappant d'un orifice (10) ménagé sur un mandrin (4) qui est disposé à l'intérieur du tube en alignement axial avec la filière, le calibrage et le refroidissement du tube gonflé (3) à l'intérieur d'un élément de calibrage (5) de façon que le fluide sous pression s'écoule le long de la surface intérieure du tube pour maintenir sa surface extérieure en contact avec l'élément de calibrage, la coupe longitudinale du tube quand celui-ci a été refroidi jusqu'à une température au-dessous de la température de remollissement de la matière et la conversion du tube coupé en une forme en feuille, caractérisé en ce que le fluide sous pression sort de l'orifice (10) du mandrin (4) disposé à l'extrémité amont de l'élément de calibrage (5) où le gonflement du tube (3) est achevé, l'orifice (10) établissant une ouverture d'écoulement de sortie annulaire autour de l'axe du mandrin (4) dans le sens du déplacement du tube (3) de telle manière que l'orifice (10) ne dirige pas le fluide sous pression dans le renflement (3') du tube.

2. Procédé selon la revendication 1, dans lequel le débit d'écoulement du fluide sous pression dépasse la vitesse de déplacement du tube (3).

3. Procédé selon la revendication 1 ou la revendication 2, dans lequel un fluide sous pression est dirigé vers la surface extérieure du tube (3) pendant son parcours à travers l'élément de calibrage (5).

4. Dispositif pour fabriquer des feuilles suivant le procédé selon la revendication 1, comprenant une extrudeuse ayant une filière d'extrusion (1) pour extruder une matière thermoplastique sous forme de tube, un mandrin (4) situé pour s'étendre dans le tube thermoplastique extrudé, le mandrin ayant un orifice (10) pour l'introduction d'un fluide sous pression dans le tube thermoplastique, un élément de calibrage (5) pour entourer le tube thermoplastique extrudé, cet élément de calibrage étant muni d'un moyen de refroidissement (14), un moyen de coupe (8) pour couper longitudinalement le tube thermoplastique, un moyen de tirage (9) pour le tube coupé, caractérisé en ce que l'orifice (10) du mandrin (4) est muni d'une ouverture d'écoulement de sortie annulaire autour de l'axe du mandrin dans le sens du déplacement du tube (3) et en outre d'un capot à profil aérodynamique (13) disposé de façon que le fluide sous pression ne soit pas dirigé dans le renflement (3') du tube, le mandrin (4) et l'élément de calibrage (5) étant disposés pour pouvoir se déplacer l'un par rapport à l'autre et par rapport à la filière (1).

5. Dispositif selon la revendication 4, dans lequel l'élément de calibrage (5) comprend un serpentin de refroidissement (15) dont les intervalles entre ses spires individuelles formant la surface de contact avec la surface extérieure du tube (3) sont en communication avec une source pour un fluide sous pression dirigé vers la surface extérieure du tube et de là vers l'atmosphère.

## Patentansprüche

1. Verfahren zur Herstellung einer Bahn aus geschäumtem thermoplastischem Material durch Extrudieren des thermoplastischen Materials in Rohr- bzw. Schlauchform durch ein Mundstück (1), durch Expandieren dieses Schlauches (3) in einen Übergangsteil unter Bildung einer "Schlauchblase" (3') mit Hilfe eines aus einer Öffnung (10) ausgegebenen Druckmittels, wobei die Öffnung (10) an einem Dorn (4) angeordnet ist, der sich innerhalb des Schlauches in axialer Ausrichtung mit dem Mundstück (1) befindet, durch Kalibrieren und Kühlen des expandierten Schlauches (3) innerhalb eines Kalibrierorganes (5), wobei das Druckmittel längs der Schlauchinnenfläche entlangströmt, um die Schlauchaußenfläche in Kontakt mit dem Kalibrierelement (5) zu halten, durch axiales Aufschneiden des Schlauches nach Abkühlen auf eine Temperatur unterhalb der Materialerweichungstemperatur und durch Überführen bzw. Umformen des aufgeschnittenen Schlauches in eine Bahnform, dadurch gekennzeichnet, daß das Druckmittel so ausgegeben wird, daß es aus einer Öffnung (10) des Dornes (4) austritt, die am Anströmungsende des Kalibrierorgans (5) angeordnet ist, an dem das Expandieren des Schlauches (3) beendet ist, und die einen ringförmigen Ausströmauslaß rings um die Dornachse in solcher Weise in Schlauchbewegungsrichtung aufweist, daß die Öffnung (10) das Druckmittel nicht direkt in die Schlauchblase (3') lenkt.

2. Verfahren nach Anspruch 1, dadurch gekennzeichnet, daß die Strömungsgeschwindigkeit des Druckmittel größer gewählt wird als die Schlauchbewegungsgeschwindigkeit.

3. Verfahren nach Anspruch 1 oder 2, dadurch gekennzeichnet, daß ein Druckmittel auf dessen Weg durch das Kalibrierorgan (5) gegen die Schlauchaußenfläche gerichtet wird.

4. Vorrichtung zur Herstellung einer Bahn zur Durchführung des Verfahrens nach Anspruch 1 mit einer ein Extrudiermundstück (1) zum Extrudieren thermoplastischen Materials in Rohr- bzw. Schlauchform aufweisenden Strangpresse, mit einem sich in der extrudierten Schlauch erstreckenden Dorn (4), der eine Druckmittelöffnung (10) aufweist, und mit einer Trennvorrichtung und einer Aufnahmeeinrichtung für den aufgeschnittenen Schlauch, dadurch gekennzeichnet, daß die Öffnung (10) des Dornes (4) mit einem ringförmigen in Schlauchbewegungsrichtung gerichteten Ausströmauslaß rings um die Dornachse und mit einer Anströmkappe (13) derart versehen ist, daß das Druckmittel nicht in die Schlauchblase (3') gelenkt ist, und daß der Dorn (4) und das Kalibrierorgan (5) in Bezug zueinander und in Bezug zum Mundstück (1) beweglich angeordnet sind.

5. Vorrichtung nach Anspruch 4, dadurch gekennzeichnet, daß das Kalibrierorgan (5) eine Kühlspule (15) aufweist, bei der die Zwischenräume zwischen ihren einzelnen Wicklungen, welche den Kontaktbereich mit der Schlauchaußenfläche bilden, in Verbindung mit einer Quelle von Druckmittel stehen, das gegen die Schlauchaußenfläche und von dort zur Atmosphäre gerichttet ist.

1